# EUROPEAN PATENT APPLICATION

(11) **EP 3 562 119 A1**
(43) Date of publication of application: **30.10.2019**
(21) Application number: 18741422.2
(22) Date of filing: 19.01.2018
(51) Int. Cl.: H04L 29/06, H04L 29/08

(54) **DATA PROCESSING METHOD, COMMUNICATION DEVICE AND NETWORK DEVICE**

(30) Priority: 20.01.2017 CN 201710051870
(71) Applicant: Huawei Technologies Co., Ltd., Longgang District Shenzhen, Guangdong 518129 (CN)
(72) Inventor: TANG, Xun, Shenzhen Guangdong 518129 (CN); QUAN, Wei, Shenzhen Guangdong 518129 (CN); ZHANG, Jian, Shenzhen Guangdong 518129 (CN)
(74) Representative: Gill Jennings & Every LLP
(86) International application number: PCT/CN2018/073408
(87) International publication number: WO 2018/133840

(57) **Abstract**

Embodiments of this application disclose a data processing method, a communications device, and a network device, to apply a transparent media access control (English full name: Media Access Control, MAC for short) structure to uplink and downlink data transmission processes in communication transmission, so as to expand an application scope of the transparent MAC structure to meet a communication development requirement. The method in the embodiments of this application includes: obtaining, by a communications device, configuration information, where the configuration information is used to indicate that a specific logical channel uses a transparent media access control MAC mode, and the specific logical channel is determined by a network device; and processing, by the communications device, a media access control packet data unit MAC PDU based on the configuration information.

## Description

This application claims priority to Chinese Patent No. 201710051870.5, filed with the Chinese Patent Office on January 20, 2017, and entitled "DATA PROCESSING METHOD, TERMINAL, AND NETWORK DEVICE", which is incorporated herein by reference in its entirety.

### TECHNICAL FIELD

This application relates to the communications field, and in particular, to a data processing method, a communications device, and a network device.

### BACKGROUND

In long time evolution (English full name: Long Time Evolution, LTE for short) protocol stacks, a user-plane protocol stack includes four layers: a packet data convergence protocol (English full name: Packet Data Convergence Protocol, PDCP for short) layer, a radio link control (English full name: Radio Link Control, RLC for short) layer, a media access control (English full name: Media Access Control, MAC for short) layer, and a physical layer (English full name: Physical Layer, PHY for short). At a transmit end, for each data packet, Internet protocol (English full name: Internet Protocol, IP for short) head compression and encryption are completed at the PDCP layer, and a PDCP data head is added; segmentation or concatenation is completed at the RLC layer to adapt to different single-transmission data amounts, and an RLC data head is added; and at the MAC layer, data of different logical channels is converged (Each logical channel corresponds to one set of PDCP and RLC entities, and data of a logical channel is also referred to as an RLC packet data unit (English full name: Packet Data Unit, PDU for short) or a MAC service data unit (English full name: Service Data Unit, SDU for short)), and a MAC control element (English full name: Media Access Control Control Element, MAC CE for short) that may need to be transmitted is added, to constitute a final MAC PDU. The MAC layer sends the MAC PDU to the PHY layer, and the PHY layer completes data sending. At a receive end, the data packet is submitted sequentially from a lower layer to a higher layer, to complete reception.

At present, with development of communications technologies, technicians have designed a simple MAC PDU structure referred to as transparent MAC, to reduce a data processing delay. A transparent MAC PDU includes only one MAC SDU, in other words, data of only one logical channel is included, and no MAC subhead is included. At present, this structure is used only for a downlink paging channel (English full name: Paging Channel, PCH for short) and a broadcast channel (English full name: Broadcast Channel, BCH for short). The PCH implements reception by using a paging radio network temporary identifier (English full name: Paging Radio Network Temporary Identifier, P-RNTI for short), and the BCH implements reception through a physical broadcast channel (English full name: Physical Broadcast Channel, PBCH for short). On a user equipment (English full name: User Equipment, UE for short) side, after completing data demodulation, a PHY layer submits data to a MAC layer through a corresponding PCH or BCH. In this case, the MAC layer may perform no processing, and directly submits the SDU to an RLC layer.

In the current communications field, reducing a data processing delay is required in increasingly many scenarios. However, currently, transparent MAC is used only for the downlink PCH and BCH. To be specific, the transparent MAC is used in a relatively limited application scope, and cannot meet a communication development requirement.

### SUMMARY

Embodiments of this application provide a data processing method, a terminal, and a network device, to apply a transparent MAC structure to uplink and downlink data transmission processes in communication transmission, so as to expand an application scope of the transparent structure to meet a communication development requirement.

According to a first aspect, an embodiment of this application provides a data processing method, including:
obtaining, by a terminal, configuration information, where the configuration information is used to indicate that a specific logical channel uses a transparent media access control MAC mode, and the specific logical channel is determined by a network device; and then processing, by the terminal, a media access control packet data unit MAC PDU based on the configuration information.

In the technical solution provided by this embodiment of this application, the terminal processes the MAC PDU based on the configuration information of the specific logical channel. Because the terminal can identify the specific logical channel based on the configuration information, the terminal is able to process the MAC PDU, thereby implementing uplink and downlink data transmission in communication transmission.

Optionally, the terminal can implement different MAC PDU processing methods depending on a status of the terminal specifically as follows:
when the terminal acts as a data sending device, the terminal constructs the MAC PDU based on the configuration information; or
when the terminal acts as a data sending device, the terminal decapsulates the MAC PDU based on the configuration information.

In the technical solution provided by this embodiment of this application, the terminal acts as different data processing devices and performs different processing for the MAC PDU based on the configuration information, thereby implementing uplink and downlink data transmission in communication transmission.

Optionally, in this embodiment of this application, there are different implementations for the configuration information depending on a quantity of specific logical channels. Specific implementations are as follows.

When the specific logical channel is one logical channel, that is, a quantity of specific logical channels is 1, the configuration information has the following several implementations.

In a possible implementation, the configuration information is logical channel information of the specific logical channel that is included in downlink control information DCI corresponding to the MAC PDU.

In another possible implementation, the configuration information is a specific radio network temporary identifier RNTI specified for the specific logical channel.

In another possible implementation, the configuration information is logical channel information of the specific logical channel that is in half-static scheduling configuration information corresponding to the MAC PDU.

When the specific logical channel is a plurality of logical channels, that is, a quantity of specific logical channels is an integer greater than 1, the configuration information has the following several implementations.

In a possible implementation, the configuration information is data amount information of the specific logical channel and/or logical channel information of the specific logical channel that is included in downlink control information DCI corresponding to the MAC PDU.

In a possible implementation, the configuration information is data amount information of the specific logical channel and/or logical channel information of the specific logical channel that is included in half-static scheduling configuration information corresponding to the MAC PDU.

Based on the foregoing implementations, the logical channel information of the specific logical channel is a logical channel identifier ID of the specific logical channel or a logical channel index of the specific logical channel, where the logical channel index is allocated by the network device, and the logical channel index is in a one-to-one correspondence with the logical channel identifier ID; the half-static scheduling configuration information is at least one of radio resource control RRC configuration information, activation information, or release information; and the data amount information of the specific logical channel is a specific quantity of bytes of transmission data of the specific logical channel, a percentage of a specific quantity of bytes of transmission data of the specific logical channel in a total data amount of the MAC PDU, or a default value obtained by dividing a data amount of the MAC PDU by the quantity of specific logical channels.

In the technical solution provided by this embodiment of this application, the configuration information has a plurality of implementations, which increases manners for the terminal to process the MAC PDU.

Optionally, the terminal obtains the configuration information of the specific logical channel in a plurality of manners. In a possible implementation, the terminal can receive the configuration information sent by the network device.

In another possible implementation, the terminal can obtain the configuration information from a predetermined protocol. A specific implementation is not limited herein.

Optionally, when the terminal acts as a data sending device, specific operations for the terminal to construct the MAC PDU based on the configuration information may be as follows.

In a possible implementation, the terminal determines a data amount of a service data unit SDU of the specific logical channel based on the configuration information, and the terminal encapsulates to-be-transmitted data of the specific logical channel in a structure of the MAC PDU based on the data amount of the SDU of the specific logical channel, to constitute the MAC PDU.

Based on this manner, the terminal completes, in the following manner, encapsulating the to-be-transmitted data of the specific logical channel in the structure of the MAC PDU based on the data amount of the SDU of the specific logical channel: if the terminal determines that the data amount of the to-be-transmitted data is greater than the data amount of the SDU of the specific logical channel, the terminal encapsulates valid to-be-transmitted data of the specific logical channel in the structure of the MAC PDU, to constitute the MAC PDU, where a data amount of the valid to-be-transmitted data is equal to the data amount of the SDU of the specific logical channel, and the valid to-be-transmitted data is included in the to-be-transmitted data; or if the terminal determines that the data amount of the to-be-transmitted data is less than the data amount of the SDU of the specific logical channel, the terminal repeatedly encapsulates the to-be-transmitted data in a structure of the SDU of the specific logical channel, and encapsulates the SDU of the specific logical channel, to constitute the MAC PDU.

In a possible implementation, when the terminal determines that the quantity of specific logical channels is an integer greater than 1, the terminal encapsulates, according to a specific rule and based on the data amount of the SDU of the specific logical channel, the to-be-transmitted data in the structure of the MAC PDU, to constitute the MAC PDU.

Based on the foregoing method, the specific rule is to encapsulate, in the structure of the MAC PDU in ascending order of logical channel identifiers IDs corresponding to the specific logical channels, SDUs corresponding to the specific logical channels; or the specific rule is to encapsulate, in the structure of the MAC PDU in descending order of logical channel identifiers IDs corresponding to the specific logical channels, SDUs corresponding to the specific logical channels; or the specific rule is to encapsulate, in a preset order in the structure of the MAC PDU, SDUs corresponding to the specific logical channels, where the preset order is determined by the network device or specified in a protocol.

In a possible implementation, when the terminal determines that the quantity of specific logical channels is an integer greater than 1, the terminal adds a corresponding subhead to the SDU of the specific logical channel in the structure of the MAC PDU, where the subhead includes only a length field, and the length field is used to indicate a data amount of the specific logical channel.

In this embodiment of this application, an SDU of a last specific logical channel in the structure of the MAC PDU may have no corresponding subhead.

In the technical solution provided by this embodiment of this application, the terminal constructs the MAC PDU based on the configuration information in a plurality of manners, increasing MAC PDU construction flexibility and diversifying MAC PDU structures.

According to a second aspect, an embodiment of this application provides a data processing method, including:
sending, by a network device, configuration information to a terminal, where the configuration information is used to indicate that a specific logical channel uses a transparent MAC mode, and the specific logical channel is determined by the network device; and processing, by the network device, a MAC PDU based on the configuration information.

In the technical solution provided by this embodiment of this application, the network device sends the configuration information of the specific logical channel to the terminal, and processes the MAC PDU based on the configuration information of the specific logical channel. Because the network device can identify the specific logical channel based on the configuration information, and the terminal can also identify the specific logical channel based on the configuration information, the MAC PDU can be processed when applied for uplink and downlink data, thereby implementing uplink and downlink data transmission in communication transmission.

Optionally, the network device can implement different MAC PDU processing methods depending on a status of the terminal specifically as follows:
when the network device acts as a data sending device, the network device constructs the MAC PDU based on the configuration information; or
when the network device acts as a data receiving device, the network device decapsulates the MAC PDU based on the configuration information.

In the technical solution provided by this embodiment of this application, the network device acts as different data processing devices and performs different processing for the MAC PDU based on the configuration information, thereby implementing uplink and downlink data transmission in communication transmission.

Optionally, in this embodiment of this application, there are different implementations for the configuration information depending on a quantity of specific logical channels. Specific implementations are as follows.

When the specific logical channel is one logical channel, that is, a quantity of specific logical channels is 1, the configuration information has the following several implementations.

In a possible implementation, the configuration information is logical channel information of the specific logical channel that is included in downlink control information DCI corresponding to the MAC PDU.

In another possible implementation, the configuration information is a specific radio network temporary identifier RNTI specified for the specific logical channel.

In another possible implementation, the configuration information is logical channel information of the specific logical channel that is in half-static scheduling configuration information corresponding to the MAC PDU.

When the specific logical channel is a plurality of logical channels, that is, a quantity of specific logical channels is an integer greater than 1, the configuration information has the following several implementations.

In a possible implementation, the configuration information is data amount information of the specific logical channel and/or logical channel information of the specific logical channel that is included in downlink control information DCI corresponding to the MAC PDU.

In a possible implementation, the configuration information is data amount information of the specific logical channel and/or logical channel information of the specific logical channel that is included in half-static scheduling configuration information corresponding to the MAC PDU.

Based on the foregoing implementations, the logical channel information of the specific logical channel is a logical channel identifier ID of the specific logical channel or a logical channel index of the specific logical channel, where the logical channel index is allocated by the network device; the half-static scheduling configuration information is at least one of radio resource control RRC configuration information, activation information, or release information; and the data amount information of the specific logical channel is a specific quantity of bytes of transmission data of the specific logical channel, a percentage of a specific quantity of bytes of transmission data of the specific logical channel in a total data amount of the MAC PDU, or a default value obtained by dividing a data amount of the MAC PDU by the quantity of specific logical channels.

In the technical solution provided by this embodiment of this application, the configuration information has a plurality of implementations, which increases manners for the terminal to process the MAC PDU.

According to a third aspect, an embodiment of this application provides a data processing method applied to a data sending end, including:
if the data sending device determines that a priority of a specific logical channel is higher than that of a MAC control element CE, encapsulating, by the data sending device, an SDU of the specific logical channel and the MAC CE in a structure of a MAC PDU based on a priority sequence of the specific logical channel and the MAC CE, to constitute the MAC PDU, where the MAC CE is all MAC CEs to be sent by the data sending device; and
sending, by the data sending device, the MAC PDU to a data receiving device.

Optionally, the encapsulating, by the data sending device, an SDU of the specific logical channel and the MAC CE in a structure of a MAC PDU based on a priority sequence of the specific logical channel and the MAC CE, to constitute the MAC PDU includes:
encapsulating, by the data sending device, a subhead and the SDU of the specific logical channel at the beginning of the structure of the MAC PDU, and encapsulating the MAC CE and other logical channel data behind the SDU of the specific logical channel, to constitute the MAC PDU;
or
encapsulating, by the data sending device, the SDU of the specific logical channel at the beginning of MAC payload payload in the structure of the MAC PDU, encapsulating a subhead of the SDU of the specific logical channel at the beginning of a MAC subhead header in the structure of the MAC PDU, encapsulating payload of the MAC CE and an SDU of another logical channel behind the SDU of the specific logical channel, and encapsulating a subhead of the MAC CE and a subhead of another logical channel behind the subhead of the specific logical channel, to constitute the MAC PDU.

In the technical solution provided by this embodiment of this application, when the priority of the specific logical channel is higher than those of all MAC CEs to be sent by the data sending device, the data sending device encapsulates the SDU of the specific logical channel and the MAC CE in the structure of the MAC PDU in descending order of priorities of the specific logical channel and the MAC CE, to constitute the MAC PDU. This can ensure that the SDU of the specific logical channel can be decapsulated in priority, and is helpful to reduce a processing delay of the specific logical channel.

According to a fourth aspect, an embodiment of this application provides a terminal. The terminal has a function of implementing the terminal in the foregoing method. The function may be implemented by using hardware or by executing corresponding software by hardware. The hardware or software includes one or more modules corresponding to the function.

In a possible implementation, the terminal includes:
a receiving module, configured to obtain configuration information of a specific logical channel, where the configuration information is used to indicate that the specific logical channel uses a transparent media access control MAC mode, and the specific logical channel is determined by a network device; and
a processing module, configured to process a media access control packet data unit MAC PDU based on the configuration information.

In another possible implementation, the terminal includes:
a transceiver, a processor, and a bus, where
the transceiver is connected to the processor by using the bus;
the transceiver performs the following steps:
   obtaining configuration information of a specific logical channel, where the configuration information is used to indicate that the specific logical channel uses a transparent media access control MAC mode, and the specific logical channel is determined by a network device; and
   the processor performs the following steps:
      processing a media access control packet data unit MAC PDU based on the configuration information.

According to a fifth aspect, an embodiment of this application provides a network device. The network device has a function of implementing the network device in the foregoing method. The function may be implemented by using hardware or by executing corresponding software by hardware. The hardware or software includes one or more modules corresponding to the function.

In a possible implementation, the network device includes:
a sending module, configured to send configuration information to a terminal, where the configuration information is used to indicate that a specific logical channel uses a transparent MAC mode, and the specific logical channel is determined by the network device; and
a processing module, configured to process a MAC PDU based on the configuration information.

In another possible implementation, the network device includes:
a transceiver, a processor, and a bus, where
the transceiver is connected to the processor by using the bus;
the transceiver performs the following steps:
   sending configuration information to a terminal, where the configuration information is used to indicate that a specific logical channel uses a transparent MAC mode, and the specific logical channel is determined by the network device; and
the processor performs the following steps:
   processing a MAC PDU based on the configuration information.

According to a sixth aspect, an embodiment of this application provides a data sending device. The data sending device has a function of implementing the data sending device in the foregoing method. The function may be implemented by using hardware or by executing corresponding software by hardware. The hardware or software includes one or more modules corresponding to the function.

In a possible implementation, the data sending device includes:
a processing module, configured to, if determining that a priority of a specific logical channel is higher than that of a MAC control element CE, encapsulate an SDU of the specific logical channel and the MAC CE in a structure of a MAC PDU based on a priority sequence of the specific logical channel and the MAC CE, to constitute the MAC PDU, where the MAC CE is all MAC CEs to be sent by the data sending device; and
a sending module, configured to send the MAC PDU to a data receiving device.

Optionally, the processing module is specifically configured to encapsulate a subhead and the SDU of the specific logical channel at the beginning of the structure of the MAC PDU, and encapsulate the MAC CE and other logical channel data behind the SDU of the specific logical channel, to constitute the MAC PDU;
or
encapsulate the SDU of the specific logical channel at the beginning of MAC payload payload in the structure of the MAC PDU, encapsulate a subhead of the SDU of the specific logical channel at the beginning of a MAC subhead header in the structure of the MAC PDU, encapsulate payload of the MAC CE and an SDU of another logical channel behind the SDU of the specific logical channel, and encapsulate a subhead of the MAC CE and a subhead of another logical channel behind the subhead of the specific logical channel, to constitute the MAC PDU.

In another possible implementation, the data sending device includes:
a transceiver, a processor, and a bus, where
the transceiver is connected to the processor by using the bus;
the processor performs the following steps:
   if determining that a priority of a specific logical channel is higher than that of a MAC control element CE, encapsulating an SDU of the specific logical channel and the MAC CE in a structure of a MAC PDU based on a priority sequence of the specific logical channel and the MAC CE, to constitute a MAC PDU, where the MAC CE is all MAC CEs to be sent by the data sending device; and
   the transceiver performs the following steps:
      sending the MAC PDU to a data receiving device.

According to a seventh aspect, an embodiment of this application provides a computer storage medium. The computer storage medium stores program code, and the program code is used to execute the method in the first aspect.

It can be learned from the foregoing technical solutions that the embodiments of this application have the following advantages: In the embodiments, the terminal constructs the MAC PDU based on the configuration information of the specific logical channel, and sends the MAC PDU to a base station. Because the base station can identify the specific logical channel based on the configuration information, the base station is able to process the MAC PDU, thereby implementing uplink and downlink data transmission in communication transmission.

### DESCRIPTION OF DRAWINGS

FIG. 1 is a schematic block diagram of an LTE communications system according to an embodiment of this application;
FIG. 2 is a schematic block diagram of a 5G or an NR communications system according to an embodiment of this application;
FIG. 3 is a schematic diagram of an embodiment of a data processing method according to an embodiment of this application;
FIG. 4 is a schematic diagram of another embodiment of a data processing method according to an embodiment of this application;
FIG. 5 is a schematic diagram of encapsulation of a MAC PDU according to an embodiment of this application;
FIG. 6 is another schematic diagram of encapsulation of a MAC PDU according to an embodiment of this application;
FIG. 7 is another schematic diagram of encapsulation of a MAC PDU according to an embodiment of this application;
FIG. 8 is another schematic diagram of encapsulation of a MAC PDU according to an embodiment of this application;
FIG. 9 is a schematic diagram of another embodiment of a data processing method according to an embodiment of this application;
FIG. 10 is another schematic diagram of encapsulation of a MAC PDU according to an embodiment of this application;
FIG. 11 is another schematic diagram of encapsulation of a MAC PDU according to an embodiment of this application;
FIG. 12 is a schematic diagram of an embodiment of a terminal according to an embodiment of this application;
FIG. 13 is a schematic diagram of another embodiment of a terminal according to an embodiment of this application;
FIG. 14 is a schematic diagram of an embodiment of a data sending device according to an embodiment of this application;
FIG. 15 is a schematic diagram of another embodiment of a data sending device according to an embodiment of this application;
FIG. 16 is a schematic diagram of an embodiment of a network device according to an embodiment of this application; and
FIG. 17 is a schematic diagram of another embodiment of a network device according to an embodiment of this application.

### DESCRIPTION OF EMBODIMENTS

Embodiments of this application provide a data processing method, a terminal, and a network device, to apply a transparent MAC structure to uplink and downlink data transmission processes in communication transmission, so as to expand an application scope of the transparent structure to meet a communication development requirement.

In the specification, claims, and accompanying drawings of this application, the terms "first", "second", "third", "fourth", and so on (if existent) are intended to distinguish between similar objects but do not necessarily indicate a specific order or sequence. It should be understood that the data termed in such a way is interchangeable in proper circumstances so that the embodiments of the present invention described herein can be implemented in other orders than the order illustrated or described herein. Moreover, the terms "include", "contain" and any other variants thereof mean to cover the non-exclusive inclusion, for example, a process, method, system, product, or device that includes a list of steps or units is not necessarily limited to those units, but may include other units not expressly listed or inherent to such a process, method, system, product, or device.

In LTE protocol stacks, a user-plane protocol stack includes four layers: a PDCP layer, an RLC layer, a MAC layer, and a PHY layer. At a transmit end, for each data packet, IP head compression and encryption are completed at the PDCP layer, and a PDCP data head is added; segmentation or concatenation is completed at the RLC layer to adapt to different single-transmission data amounts, and an RLC data head is added; and at the MAC layer, data of different logical channels (Each logical channel corresponds to one set of PDCP and RLC entities, and data of a logical channel is also referred to as an RLC PDU or a MAC SDU) is converged, and a MAC CE that may need to be transmitted is added, to constitute a final MAC PDU. The MAC layer sends the MAC PDU to the PHY layer, and the PHY layer completes data sending. At a receive end, the data packet is submitted sequentially from a lower layer to a higher layer, to complete reception. At present, with development of communications technologies, technicians have designed a simple MAC PDU structure referred to as transparent MAC, to reduce a data processing delay. A transparent MAC PDU includes only one MAC SDU, in other words, data of only one logical channel is included. At present, this structure is used only for a PCH and a BCH. The PCH implements reception by using a P-RNTI, and the BCH implements reception through a PBCH. On a UE side, after completing data demodulation, a PHY layer submits data to a MAC layer through a corresponding PCH or BCH. In this case, the MAC layer may perform no processing, and directly submits the SDU to an RLC layer. In the current communications field, reducing a data processing delay is required in increasingly many scenarios. However, currently, transparent MAC is used only for the downlink PCH and BCH. To be specific, the transparent MAC is used in a relatively limited application scope, and cannot meet a communication development requirement.

To resolve this problem, an embodiment of this application provides the following technical solution: A terminal obtains configuration information, where the configuration information is used to indicate that a specific logical channel uses a transparent media access control MAC mode, and the specific logical channel is determined by a network device; and then the terminal processes a media access control packet data unit MAC PDU based on the configuration information.

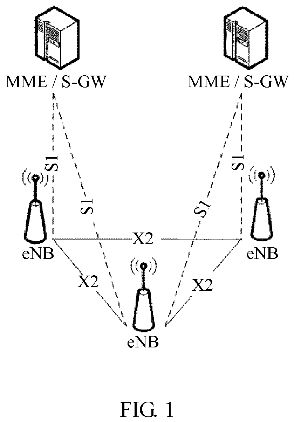

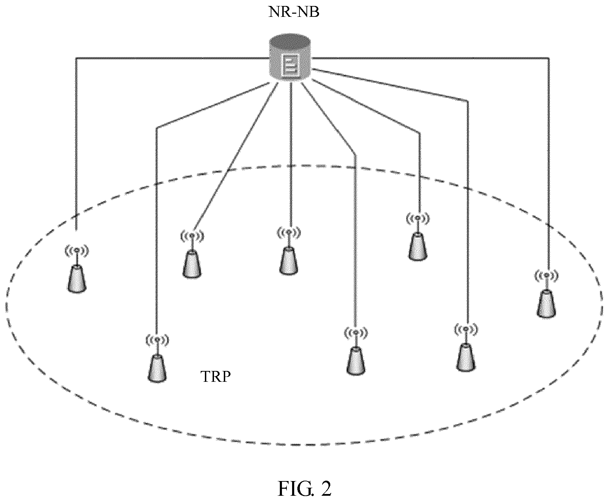

The technical solution provided by this embodiment of this application can be applied to a cellular communications system. To be specific, the technical solution can be applied to an LTE cellular communications system shown in FIG. 1 and a 5G or an NR communications system shown in FIG. 2. In the LTE cellular communications system shown in FIG. 1, each eNB has a plurality of cells, and in each cell, an eNB and UE can use a MAC PDU structure provided in this embodiment of this application. In the 5G or NR communications system shown in FIG. 2, one new radio NodeB (English full name: New Radio NodeB, NR-NB for short) may have one or more transmission reception points (English full name: Transmission Reception Point, TRP for short), and each TRP can use the MAC PDU structure provided in this embodiment of this application.

In this embodiment of this application, the terminal and the network device form a communications system. To be specific, when the terminal acts as a data sending device, the network device acts as a data receiving device of the terminal; and when the terminal acts as a data receiving device, the network device acts as a data sending device of the terminal. However, in this embodiment of this application, a manner of constructing a MAC PDU by the network device when the network device acts as a data sending device is the same as a manner of constructing a MAC PDU by the terminal, and a manner of decapsulating a MAC PDU by the network device when the network device acts as a data receiving device is the same as a manner of decapsulating a MAC PDU by the terminal. Therefore, the terminal is used as an example for description in this embodiment of this application, and details about the network device are not described herein again. In addition, the network device includes but is not limited to a base station, a TRP, a control unit CU (Central Unit), and a data unit DU (Data Unit).

In this embodiment of this application, a manner of processing a MAC PDU when the terminal acts a data receiving device is different from a manner of processing a MAC PDU when the terminal acts a data sending device. The following describes the manners separately.

### 1. When the terminal acts as a data sending device, the terminal decapsulates a MAC PDU based on configuration information.

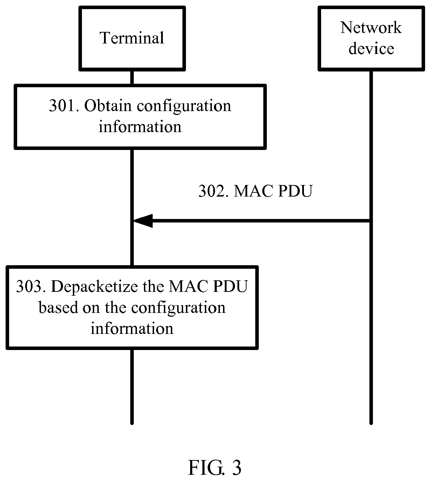

A specific scenario is shown in FIG. 3. An embodiment of a data processing method according to an embodiment of this application includes the following steps.

301: A terminal obtains configuration information.

The terminal obtains the configuration information, where the configuration information is used to indicate that a specific logical channel uses a transparent MAC mode, and the specific logical channel is determined by a network device.

In this embodiment, the specific logical channel is determined by the network device in a communications system including the terminal, and a quantity of the specific logical channels determined by the network device may be one or more. A specific quantity is not limited herein. In addition, a manner of obtaining the configuration information of the specific logical channel by the terminal may be specified in a protocol by the terminal, or the configuration information may be sent by the network device to the terminal after the network device determines the specific logical channel. A specific manner is not limited herein.

In this embodiment, the configuration information of the specific logical channel may include the following several implementations.

When the specific logical channel is one logical channel, that is, a quantity of specific logical channels is 1, the configuration information has the following several implementations.

In a possible implementation, the configuration information is logical channel information of the specific logical channel that is included in downlink control information DCI corresponding to the MAC PDU.

In another possible implementation, the configuration information is a specific radio network temporary identifier RNTI specified for the specific logical channel.

In another possible implementation, the configuration information is logical channel information of the specific logical channel that is in half-static scheduling configuration information corresponding to the MAC PDU.

When the specific logical channel is a plurality of logical channels, that is, a quantity of specific logical channels is an integer greater than 1, the configuration information has the following several implementations.

In a possible implementation, the configuration information is data amount information of the specific logical channel and logical channel information of the specific logical channel that is included in downlink control information DCI corresponding to the MAC PDU.

In a possible implementation, the configuration information is data amount information of the specific logical channel and logical channel information of the specific logical channel that is included in half-static scheduling configuration information corresponding to the MAC PDU.

Based on the foregoing implementations, the logical channel information of the specific logical channel is a logical channel identifier ID of the specific logical channel or a logical channel index of the specific logical channel, where the logical channel index is allocated by the network device and is in a one-to-one correspondence with the logical channel identifier ID, and if an index is used, the logical channel identifier ID may be expressed by using a smaller bit data amount; the half-static scheduling configuration information is at least one of radio resource control RRC configuration information, activation information, or release information; and the data amount information of the specific logical channel is a specific quantity of bytes of transmission data of the specific logical channel, a percentage of a specific quantity of bytes of transmission data of the specific logical channel in a total data amount of the MAC PDU, or a default value obtained by dividing a data amount of the MAC PDU by the quantity of specific logical channels.

In this embodiment, when the data amount information of the specific logical channel is a default value obtained by dividing the data amount of the MAC PDU by the quantity of specific logical channels, if there is a remainder, a method for allocating remaining bytes may be specified in advance. For example, a data amount of the MAC PDU is 23 bytes, the network device determines four specific logical channels, and the four specific logical channels are a logical channel 1, a logical channel 2, a logical channel 4, and a logical channel 5, respectively. According to the even division method, each specific logical channel may be allocated with five bytes, and the remaining three bytes may be all allocated to one of the four specific logical channels, such as the logical channel 4. Alternatively, the remaining three bytes may be reallocated in ascending order of logical channel ID numbers. In this case, a final byte allocation result is as follows: The logical channel 1 is allocated with six bytes, the logical channel 2 is allocated with six bytes, the logical channel 4 is allocated with six bytes, and the logical channel 5 is allocated with five bytes. There are a plurality of methods for allocating the data amount of the MAC PDU. This is not limited herein.

Based on the foregoing implementations, when the logical channel information of the specific logical channel and the data amount information of the specific logical channel are included in the DCI, the logical channel information of the specific logical channel and the data amount information of the specific logical channel may be implicitly represented in the DCI or explicitly represented in the DCI. For example, the logical channel information of the specific logical channel is a logical channel ID, the logical channel ID includes five bits, and the data amount information is represented by using a specific quantity of bytes. If the logical channel information of the specific logical channel is explicitly represented in the DCI, the DCI includes all the five bits of the logical channel ID and all the five bytes of the data amount information. If the logical channel information of the specific logical channel is implicitly represented in the DCI, the specific logical channel may be represented by using an index number, and the DCI may use only two bits to represent the index number. For example, the index number may be set to be in a range of 0 to 3, where the index number 0 is used to indicate the logical channel 1, the index number 1 is used to indicate the logical channel 2, the index number 2 is used to indicate the logical channel 4, and the index number 3 is used to indicate the logical channel 5. When the data amount information is a percentage of a specific quantity of bytes of transmission data of the specific logical channel in the total data amount of the MAC PDU, or a default value obtained by dividing the data amount of the MAC PDU by the quantity of specific logical channels, the data amount information may be represented as the percentage or the default value by using a corresponding byte. A specific manner is not limited herein. 302: The network device sends the MAC PDU to the terminal.

The network device constructs a downlink MAC PDU in a transparent MAC structure for the specific logical channel, and sends the MAC PDU to the terminal. In this embodiment, a sequence of performing step 302 and step 301 varies depending on a different specific form of the configuration information. This is not limited herein. For example, if the configuration information is data amount information of the specific logical channel and logical channel information of the specific logical channel that is included in half-static scheduling configuration information corresponding to the MAC PDU, the network device may send the configuration information to the terminal first, and then always use the configuration information in a preset time period. In this case, step 301 is performed before step 302. If the configuration information is data amount information of the specific logical channel and logical channel information of the specific logical channel that is included in half-static scheduling configuration information corresponding to the MAC PDU, the network device may send the configuration information to the terminal first, and then always use the configuration information in a preset time period. If the configuration information is logical channel information of the specific logical channel that is included in the downlink control information DCI corresponding to the MAC PDU or is a specific radio network temporary identifier RNTI specified for the specific logical channel, step 301 is performed after step 302.

303: The terminal decapsulates the MAC PDU based on the configuration information of the specific logical channel.

After the terminal receives the MAC PDU sent by the network device, the terminal decapsulates the MAC PDU based on the configuration information. To be specific, the terminal directly extracts, the corresponding MAC SDU from a MAC layer based on the logical channel ID and/or the data amount of the MAC SDU in the configuration information and submits the MAC SDU to an RLC layer for processing, without processing a MAC subhead. In this embodiment, if the configuration information is the logical channel information of the specific logical channel that is included in the downlink control information DCI corresponding to the MAC PDU, the terminal can perform PDCCH detection by using a cell radio network temporary identifier (English full name: Cell Radio Network Temporary Identifier, C-RNTI for short), and can determine, after obtaining the DCI information, the specific logical channel and that the MAC PDU is a transparent MAC PDU.

If the configuration information is the specific radio network temporary identifier RNTI specified for the specific logical channel, when performing PDCCH detection, the terminal uses the RNTI for PDCCH detection, so as to determine the DCI information of the MAC PDU, and then determine the specific logical channel and that the MAC PDU is a transparent MAC PDU.

If the configuration information is the logical channel information of the specific logical channel that is included in the half-static scheduling configuration information corresponding to the MAC PDU, the terminal identifies the logical channel information of the specific logical channel that is included in the half-static scheduling configuration information, so as to determine the specific logical channel and that the MAC PDU is a transparent MAC PDU.

In the foregoing, when a quantity of specific logical channels is 1, that is, when there is only one specific logical channel, the terminal only needs to determine the specific logical channel. If the quantity of specific logical channels is greater than 1, the terminal further needs to determine, based on the configuration information, data amount information included in each specific logical channel, so as to accurately decapsulate the MAC PDU. A specific process is the same as a process of determining the specific logical channel. Details are not described herein again.

In this embodiment, after the terminal determines, based on the configuration information, the specific logical channel and that the MAC PDU is a transparent MAC PDU, the terminal may directly submit the MAC PDU to the RLC layer after receiving the MAC PDU submitted by the PHY layer, so that the RLC layer is responsible for decapsulating the MAC PDU. The MAC layer performs no additional processing task, thereby reducing a processing delay. In addition, this ensures that downlink data transmission is no longer only limited to a downlink paging channel, and other channels can also use the transparent MAC PDU, thereby ensuring transmission of the communications system.

### 2. The terminal acts as a data sending device, and the terminal constructs the MAC PDU based on the configuration information.

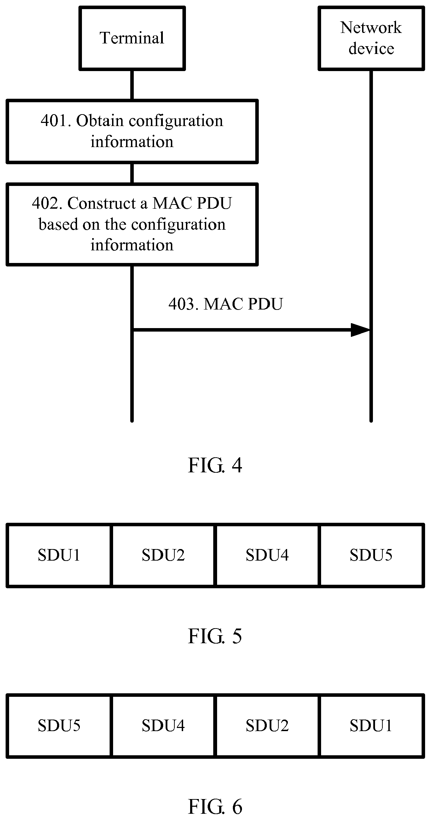

A specific scenario is shown in FIG. 4. Another embodiment of the data processing method according to an embodiment of this application includes the following steps.

Step 401 is the same as step 301 in Embodiment 3. Details are not described herein again.

402: The terminal constructs the MAC PDU based on the configuration information.

After obtaining the configuration information, the terminal determines, from the configuration information, specific channel information and a data amount of an SDU of the specific logical channel. Then the terminal encapsulates, in a structure of the MAC PDU, to-be-transmitted data of the specific logical channel based on the data amount of the SDU of the specific logical channel, to constitute the MAC PDU.

In this embodiment, that the terminal encapsulates, in a structure of the MAC PDU, to-be-transmitted data of the specific logical channel based on the data amount of the SDU of the specific logical channel may include the following several cases.

In a possible implementation, if the terminal determines that a data amount of the to-be-transmitted data is greater than the data amount of the SDU of the specific logical channel, the terminal encapsulates, in the structure of the MAC PDU, valid to-be-transmitted data of the specific logical channel, to constitute the MAC PDU, where a data amount of the valid to-be-transmitted data is equal to the data amount of the SDU of the specific logical channel, and the valid to-be-transmitted data is included in the to-be-transmitted data; or if the terminal determines that the data amount of the to-be-transmitted data is less than the data amount of the SDU of the specific logical channel, the terminal repeatedly encapsulates the to-be-transmitted data in a structure of the SDU of the specific logical channel, and encapsulates the SDU of the specific logical channel, to constitute the MAC PDU. For example, the data amount of the SDU of the specific logical channel that is obtained by the terminal based on the configuration information is nine bytes, whereas the data amount of the to-be-transmitted data of the specific logical channel is 10 bytes. In this case, the terminal uses nine bytes from the to-be-transmitted data, as valid to-be-transmitted data, and encapsulates the valid to-be-transmitted data in the MAC PDU. The remaining one byte is sent in a next transmission opportunity. If the data amount of the to-be-transmitted data of the specific logical channel is five bytes, the terminal first encapsulates the five bytes in the SDU of the specific logical channel, then selects to continue to encapsulate the first four bytes from the five bytes of the to-be-transmitted data, in the SDU of the specific logical channel. Then the terminal encapsulates the SDU of the specific logical channel to constitute the MAC PDU.

In another possible implementation, in this embodiment, the terminal may alternatively use the following solution for encapsulating the MAC PDU.

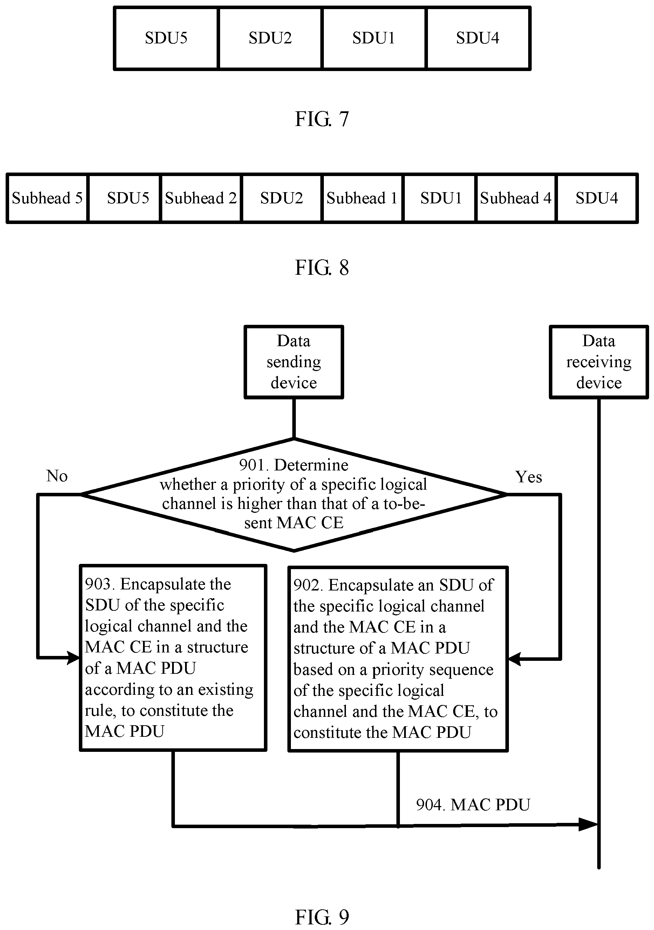

When the terminal determines that the quantity of specific logical channels is an integer greater than 1, the terminal encapsulates, according to a specific rule and based on the data amount of the SDU of the specific logical channel, the to-be-transmitted data in the structure of the MAC PDU, to constitute the MAC PDU. The specific rule is to encapsulate, in the structure of the MAC PDU in ascending order of logical channel identifiers IDs corresponding to the specific logical channels, SDUs corresponding to the specific logical channels; or the specific rule is to encapsulate, in the structure of the MAC PDU in descending order of logical channel identifiers IDs corresponding to the specific logical channels, SDUs corresponding to the specific logical channels; or the specific rule is to encapsulate, in a preset order in the structure of the MAC PDU, SDUs corresponding to the specific logical channels, where the preset order is determined by the network device or specified in a protocol. For example, when the quantity of specific logical channels is 4, and the specific logical channels are a logical channel 1, a logical channel 2, a logical channel 4, and a logical channel 5, respectively, the terminal can encapsulate, in the structure of the MAC PDU in ascending order of logical channel identifiers IDs of the logical channels, SDUs of the logical channels. To be specific, FIG. 5 shows an SDU1 of the logical channel 1, an SDU2 of the logical channel 2, an SDU4 of the logical channel 4, and an SDU5 of the logical channel 5 from left to right. Certainly, the terminal can alternatively encapsulate, in the structure of the MAC PDU in descending order of logical channel identifiers IDs of the logical channels, SDUs of the logical channels. FIG. 6 shows an SDU5 of the logical channel 5, an SDU4 of the logical channel 4, an SDU2 of the logical channel 2, and an SDU1 of the logical channel 1 from left to right. Certainly, the terminal can alternatively encapsulate, in the structure of the MAC PDU in an order specified by the network device or specified in a protocol, SDUs of the logical channels. FIG. 7 shows an SDU5 of the logical channel 5, an SDU2 of the logical channel 2, an SDU1 of the logical channel 1, and an SDU4 of the logical channel 4 from left to right. Only three possible implementations are provided herein. In actual application, possible implementations are not limited only to these three, provided that the terminal can complete encapsulating the MAC PDU.

In another possible implementation, in this embodiment, the terminal may alternatively use the following solution for encapsulating the MAC PDU.

When the terminal determines that the quantity of specific logical channels is an integer greater than 1, the terminal adds a corresponding subhead to the SDU of the specific logical channel in the structure of the MAC PDU, where the subhead includes only a length field, and the length field is used to indicate a data amount of the specific logical channel. For example, FIG. 8 shows a subhead 5 of the logical channel 5, an SDU of the logical channel 5, a subhead 2 of the logical channel 2, an SDU of the logical channel 2, a subhead 1 of the logical channel 1, an SDU of the logical channel 1, a subhead 4 of the logical channel 4, and an SDU of the logical channel 4 from left to right, where the subhead of each logical channel includes a length field used to indicate a data amount of an SDU of the logical channel. Certainly, because the logical channel 4 is located at an end of the MAC PDU, the logical channel 4 may have no subhead.

In this embodiment, in a process of constructing the MAC PDU by the terminal, the foregoing possible implementations may be used together or separately. A specific combination is not limited herein.

403: The terminal sends the MAC PDU to the network device.

The terminal sends the encapsulated MAC PDU to the network device.

In this embodiment, the terminal constructs the MAC PDU based on the configuration information of the specific logical channel, and sends the MAC PDU to the network device. Because the terminal network device can identify the specific logical channel based on the configuration information, the network device is able to process the MAC PDU, thereby implementing uplink and downlink data transmission in communication transmission.

A specific scenario is shown in FIG. 9. Another embodiment of the data processing method according to an embodiment of this application includes the following steps.

901: A data sending device determines whether a priority of a specific logical channel is higher than that of a MAC CE to be sent by the data sending device. If yes, perform step 902 and step 904; if no, perform step 903 and step 904.

The data sending device determines whether the priority of the specific logical channel is higher than that of the MAC CE to be sent by the data sending device. If yes, the data sending device performs step 902 and step 904; if no, the data sending device performs step 903 and step 904.

In this embodiment, the data sending device may be a terminal or a network device. The network device herein includes but is not limited to a base station, a TRP, a control unit CU (central unit), and a data unit DU (Data Unit). The following uses the base station as an example for description in this embodiment.

In this embodiment, the priority of the specific logical channel is determined by the network device and notified to the data sending device. Alternatively, the priority of the specific logical channel is specified in a protocol.

902: The data sending device encapsulates an SDU of the specific logical channel and the MAC CE in a structure of the MAC PDU based on a priority sequence of the specific logical channel and the MAC CE, to constitute the MAC PDU.

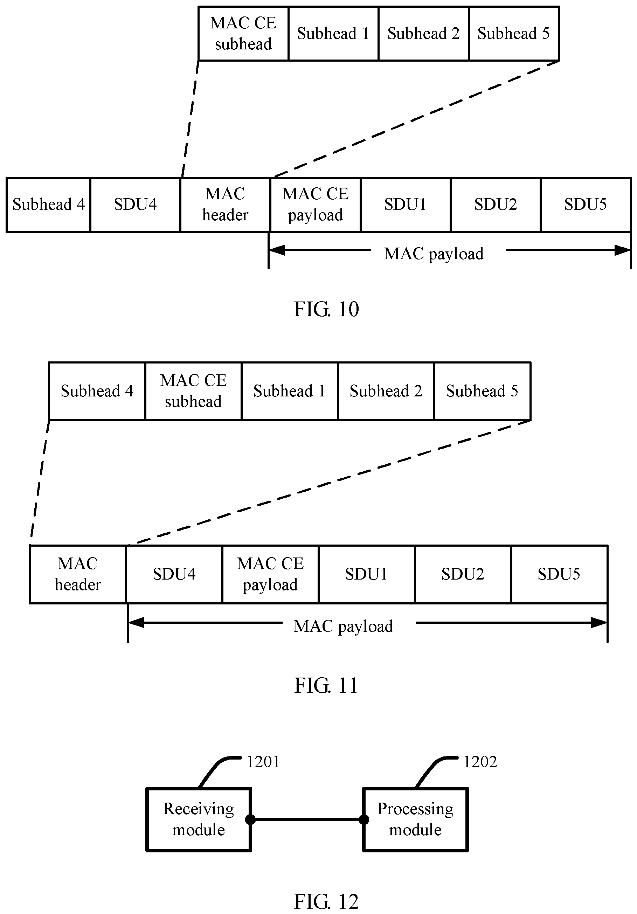

The data sending device encapsulates a subhead and the SDU of the specific logical channel at the beginning of the structure of the MAC PDU, and encapsulates the MAC CE and other logical channel data behind the SDU of the specific logical channel, to constitute the MAC PDU. For example, as shown in FIG. 10, starting from the left, a priority of a logical channel 4 in this embodiment is higher than that of the MAC CE to be sent by the data sending device. Then data sending device places an SDU4 of the logical channel 4 and a subhead 4 of the logical channel 4 at the beginning of the structure of the MAC PDU, whereas the MAC CE and subheads and SDUs of a logical channel 1, a logical channel 2, and a logical channel 5 follow the subhead 4 and the SDU4 of the logical channel 4.

Alternatively, the data sending device encapsulates the SDU of the specific logical channel at the beginning of MAC payload payload in the structure of the MAC PDU, encapsulates a subhead of the SDU of the specific logical channel at the beginning of a MAC subhead header in the structure of the MAC PDU, encapsulates payload of the MAC CE and an SDU of another logical channel behind the SDU of the specific logical channel, and encapsulates a subhead of the MAC CE and a subhead of another logical channel behind the subhead of the specific logical channel, to constitute the MAC PDU. For example, as shown in FIG. 11, starting from the left, a priority of a logical channel 4 in this embodiment is higher than that of the MAC CE to be sent by the data sending device. Then the data sending device places an SDU4 of the logical channel 4 at the beginning of the MAC payload payload in the structure of the MAC PDU, encapsulates a subhead 4 of the logical channel 4 at the beginning of the MAC subhead header in the structure of the MAC PDU, whereas a subhead of the MAC CE, a subhead 1 of a logical channel 1, a subhead 2 of a logical channel 2, and a subhead 5 of a logical channel 5 follow the subhead 4 of the logical channel 4, and places an SDU5 of a logical channel 5 after the SDU of the specific logical channel, to constitute the MAC PDU.

903: The data sending device encapsulates the SDU of the specific logical channel and the MAC CE in the structure of the MAC PDU according to an existing rule, to constitute the MAC PDU.

The data sending device encapsulates the MAC CE and the SDU of the specific logical channel in the structure of the MAC PDU according to a rule that an encapsulating position of the MAC CE is before an encapsulating position of the SDU of the specific logical channel in the structure of the MAC PDU.

904: The data sending device sends the MAC PDU to a data receiving device.

The data sending device sends the encapsulated MAC PDU to the data receiving device.

In this embodiment, when the priority of the specific logical channel is higher than those of all MAC CEs to be sent by the data sending device, the data sending device encapsulates the SDU of the specific logical channel and the MAC CE in the structure of the MAC PDU in descending order of priorities of the specific logical channel and the MAC CE, to constitute the MAC PDU. This can ensure that the SDU of the specific logical channel can be decapsulated in priority, and is helpful to reduce a processing delay of the specific logical channel.

The foregoing describes the data processing method in the embodiments of this application, and the following describes a terminal and a data sending device according to an embodiment of this application.

For a specific scenario, refer to FIG. 12 that shows an embodiment of a terminal according to an embodiment of this application. The terminal includes:
a receiving module 1201, configured to obtain configuration information of a specific logical channel, where the configuration information is used to indicate that the specific logical channel uses a transparent media access control MAC mode, and the specific logical channel is determined by a network device; and
a processing module 1202, configured to process a media access control packet data unit MAC PDU based on the configuration information.

Optionally, the processing module 1202 is specifically configured to, if the terminal acts as a data sending device, construct the MAC PDU based on the configuration information, and send the MAC PDU to the network device; or
if the terminal acts as a data receiving device, decapsulate, based on the configuration information, the MAC PDU sent by the network device.

Optionally, when a quantity of specific logical channels is 1, the configuration information is logical channel information of the specific logical channel that is included in downlink control information DCI corresponding to the MAC PDU;
or
when a quantity of specific logical channels is 1, the configuration information is a specific radio network temporary identifier RNTI specified for the specific logical channel;
or
when a quantity of specific logical channels is 1, the configuration information is logical channel information of the specific logical channel that is in half-static scheduling configuration information corresponding to the MAC PDU.

Optionally, when a quantity of specific logical channels is an integer greater than 1, the configuration information is data amount information of the specific logical channel and logical channel information of the specific logical channel that is included in downlink control information DCI corresponding to the MAC PDU;
or
when a quantity of specific logical channels is an integer greater than 1, the configuration information is data amount information of the specific logical channel and logical channel information of the specific logical channel that is included in half-static scheduling configuration information corresponding to the MAC PDU.

Optionally, the logical channel information of the specific logical channel is a logical channel identifier ID of the specific logical channel or a logical channel index of the specific logical channel, where the logical channel index is allocated by the network device; and
the half-static scheduling configuration information is at least one of radio resource control RRC configuration information, activation information, or release information.

Optionally, the data amount information of the specific logical channel is a specific quantity of bytes of transmission data of the specific logical channel, a percentage of a specific quantity of bytes of transmission data of the specific logical channel in a total data amount of the MAC PDU, or a default value obtained by dividing a data amount of the MAC PDU by the quantity of specific logical channels.

Optionally, the receiving module 1201 is specifically configured to receive the configuration information sent by the network device.

Optionally, the processing module 1202 is specifically configured to determine a data amount of a service data unit SDU of the specific logical channel based on the configuration information; and
encapsulate to-be-transmitted data of the specific logical channel in a structure of the MAC PDU based on the data amount of the SDU of the specific logical channel, to constitute the MAC PDU.

Optionally, the processing module 1202 is specifically configured to, if determining that a data amount of the to-be-transmitted data is greater than the data amount of the SDU of the specific logical channel, encapsulate valid to-be-transmitted data of the specific logical channel in the structure of the MAC PDU, to constitute the MAC PDU, where a data amount of the valid to-be-transmitted data is equal to the data amount of the SDU of the specific logical channel, and the valid to-be-transmitted data is included in the to-be-transmitted data; or
if determining that a data amount of the to-be-transmitted data is less than the data amount of the SDU of the particular logical channel, repeatedly encapsulate the to-be-transmitted data in a structure of the SDU of the specific logical channel, and encapsulate the SDU of the specific logical channel, to constitute the MAC PDU.

Optionally, the processing module 1202 is specifically configured to, when determining that the quantity of specific logical channels is an integer greater than 1, encapsulate, according to a specific rule and based on the data amount of the SDU of the specific logical channel, the to-be-transmitted data in the structure of the MAC PDU, to constitute the MAC PDU.

Optionally, the specific rule is to encapsulate, in the structure of the MAC PDU in ascending order of logical channel identifiers IDs corresponding to the specific logical channels, SDUs corresponding to the specific logical channels;
or
the specific rule is to encapsulate, in the structure of the MAC PDU in descending order of logical channel IDs corresponding to the specific logical channels, SDUs corresponding to the specific logical channels;
or
the specific rule is to encapsulate, in a preset order in the structure of the MAC PDU, SDUs corresponding to the specific logical channels, where the preset order is determined by the network device or specified in a protocol.

Optionally, the processing module 1202 is specifically configured to, when determining that the quantity of specific logical channels is an integer greater than 1, add a corresponding subhead to the SDU of the specific logical channel in the structure of the MAC PDU, where the subhead includes a length field, and the length field is used to indicate a data amount of the specific logical channel.

In this embodiment, the processing module 1202 constructs the MAC PDU based on the configuration information of the specific logical channel. Because the network device can identify the specific logical channel based on the configuration information, the network device is able to process the MAC PDU, thereby implementing uplink and downlink data transmission in communication transmission.

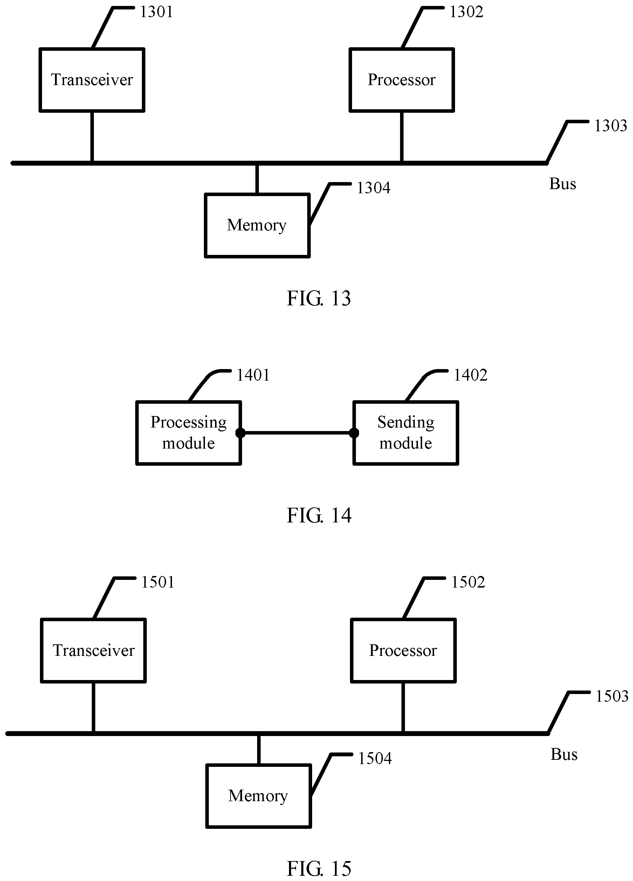

For a specific scenario, refer to FIG. 13 that shows another embodiment of a terminal according to an embodiment of this application. The terminal includes:
a transceiver 1301 and a processor 1302, and the transceiver 1301 and the processor 1302 are connected to each other by using a bus 1303.

The bus 1303 may be a peripheral component interconnect (peripheral component interconnect, PCI for short) bus, an extended industry standard architecture (extended industry standard architecture, EISA for short) bus, or the like. The bus may be classified into an address bus, a data bus, a control bus, and the like. For ease of representation, only one thick line is used to represent the bus in FIG. 13, but this does not mean that there is only one bus or only one type of bus.

The processor 1302 may be a central processing unit (central processing unit, CPU for short), a network processor (network processor, NP for short), or a combination of a CPU and an NP.

The processor 1302 may further include a hardware chip. The hardware chip may be an application-specific integrated circuit (application-specific integrated circuit, ASIC for short), a programmable logic device (programmable logic device, PLD for short), or a combination thereof. The PLD may be a complex programmable logic device (complex programmable logic device, CPLD for short), a field-programmable gate array (field-programmable gate array, FPGA for short), a generic array logic (generic array logic, GAL for short), or any combination thereof.

As shown in FIG. 13, the terminal may further include a memory 1304. The memory 1304 may include a volatile memory (volatile memory) such as a random-access memory (random-access memory, RAM for short). The memory may alternatively include a non-volatile memory (non-volatile memory) such as a flash memory (flash memory), a hard disk drive (hard disk drive, HDD for short) or a solid-state drive (solid-state drive, SSD for short). Alternatively, the memory 1304 may include a combination of the foregoing types of memories.

Optionally, the memory 1304 may be further configured to store a program instruction. The processor 1302 may invoke the program instruction stored in the memory 1304 to execute one or more steps in the embodiments shown in FIG. 1 to FIG. 4 or execute an optional implementation thereof, to implement operations of the terminal in the foregoing method.

The transceiver 1301 performs the following step:
obtaining configuration information of a specific logical channel, where the configuration information is used to indicate that the specific logical channel uses a transparent media access control MAC mode, and the specific logical channel is determined by a network device.

The processor 1302 performs the following step:
processing a media access control packet data unit MAC PDU based on the configuration information.

In this embodiment of this application, the transceiver 1301 executes receiving the MAC PDU sent by the network device to the terminal in the embodiment shown in FIG. 3, and executes sending the MAC PDU to the network device and the configuration information sent by the network device in the embodiment shown in FIG. 4.

The processor 1302 performs step 302 and step 303 in the embodiment shown in FIG. 3, and also performs step 401 and step 402 in the embodiment shown in FIG. 4.

In this embodiment, the processor 1302 constructs the MAC PDU based on the configuration information of the specific logical channel. Because the network device can identify the specific logical channel based on the configuration information, the network device is able to process the MAC PDU, thereby implementing uplink and downlink data transmission in communication transmission.

The following describes a data sending device according to an embodiment of this application. For a specific scenario, refer to FIG. 14 that shows an embodiment of the data sending device according to this embodiment of this application. The data sending device includes:
a processing module 1401, configured to, if determining that a priority of a specific logical channel is higher than that of a MAC control element CE, encapsulate an SDU of the specific logical channel and the MAC CE in a structure of a MAC PDU based on a priority sequence of the specific logical channel and the MAC CE, to constitute a MAC PDU, where the MAC CE is all MAC CEs to be sent by the data sending device; and
a sending module 1402, configured to send the MAC PDU to a data receiving device.

Optionally, the processing module 1401 is specifically configured to encapsulate a subhead and the SDU of the specific logical channel at the beginning of the structure of the MAC PDU, and encapsulate the MAC CE and other logical channel data behind the SDU of the specific logical channel, to constitute the MAC PDU;
or
encapsulate the SDU of the specific logical channel at the beginning of MAC payload payload in the structure of the MAC PDU, encapsulate a subhead of the SDU of the specific logical channel at the beginning of a MAC subhead header in the structure of the MAC PDU, encapsulate the MAC CE and an SDU of another logical channel behind the SDU of the specific logical channel, and encapsulate a subhead of the MAC CE and a subhead of another logical channel behind the subhead of the specific logical channel, to constitute the MAC PDU.

In this embodiment, when the priority of the specific logical channel is higher than those of all MAC CEs to be sent by the data sending device, the processing module 1401 encapsulates the SDU of the specific logical channel and the MAC CE in the structure of the MAC PDU in descending order of priorities of the specific logical channel and the MAC CE, to constitute the MAC PDU. This can ensure that the SDU of the specific logical channel can be decapsulated in priority, and is helpful to reduce a processing delay of the specific logical channel.

For a specific scenario, refer to FIG. 15 that shows another embodiment of a data sending device according to an embodiment of this application. The data sending device includes:
a transceiver 1501 and a processor 1502, where the transceiver 1501 and the processor 1502 are connected to each other by using a bus 1503.

The bus 1503 may be a peripheral component interconnect (peripheral component interconnect, PCI for short) bus, an extended industry standard architecture (extended industry standard architecture, EISA for short) bus, or the like. The bus may be classified into an address bus, a data bus, a control bus, and the like. For ease of representation, only one thick line is used to represent the bus in FIG. 15, but this does not mean that there is only one bus or only one type of bus.

The processor 1502 may be a central processing unit (central processing unit, CPU for short), a network processor (network processor, NP for short), or a combination of a CPU and an NP.

The processor 1502 may further include a hardware chip. The hardware chip may be an application-specific integrated circuit (application-specific integrated circuit, ASIC for short), a programmable logic device (programmable logic device, PLD for short), or a combination thereof. The PLD may be a complex programmable logic device (complex programmable logic device, CPLD for short), a field-programmable gate array (field-programmable gate array, FPGA for short), a generic array logic (generic array logic, GAL for short), or any combination thereof.

As shown in FIG. 15, the data sending device may further include a memory 1504. The memory 1504 may include a volatile memory (volatile memory) such as a random-access memory (random-access memory, RAM for short). The memory may alternatively include a non-volatile memory (non-volatile memory) such as a flash memory (flash memory), a hard disk drive (hard disk drive, HDD for short) or a solid-state drive (solid-state drive, SSD for short). Alternatively, the memory 1504 may include a combination of the foregoing types of memories.

Optionally, the memory 1504 may be further configured to store a program instruction. The processor 1502 may invoke the program instruction stored in the memory 1504 to execute one or more steps in the embodiments shown in FIG. 1 to FIG. 4 or execute an optional implementation thereof, to implement operations of the data sending device in the foregoing method.

The processor 1502 performs the following step:
if determining that a priority of a specific logical channel is higher than that of a MAC control element CE, encapsulating an SDU of the specific logical channel and the MAC CE in a structure of a MAC PDU based on a priority sequence of the specific logical channel and the MAC CE, to constitute a MAC PDU, where the MAC CE is all MAC CEs to be sent by the data sending device.

The transceiver 1501 performs the following step:
sending the MAC PDU to a data receiving device.

Optionally, the processor 1502 further performs the following step:
encapsulating a subhead and the SDU of the specific logical channel at the beginning of the structure of the MAC PDU, and encapsulating the MAC CE and other logical channel data behind the SDU of the specific logical channel, to constitute the MAC PDU;
or
encapsulating the SDU of the specific logical channel at the beginning of MAC payload payload in the structure of the MAC PDU, encapsulating a subhead of the SDU of the specific logical channel at the beginning of a MAC subhead header in the structure of the MAC PDU, encapsulating the MAC CE and an SDU of another logical channel behind the SDU of the specific logical channel, and encapsulating a subhead of the MAC CE and a subhead of another logical channel behind the subhead of the specific logical channel, to constitute the MAC PDU.

In this embodiment, when the priority of the specific logical channel is higher than those of all MAC CEs to be sent by the data sending device, the processor 1502 encapsulates the SDU of the specific logical channel and the MAC CE in the structure of the MAC PDU in descending order of priorities of the specific logical channel and the MAC CE, to constitute the MAC PDU. This can ensure that the SDU of the specific logical channel can be decapsulated in priority, and is helpful to reduce a processing delay of the specific logical channel.

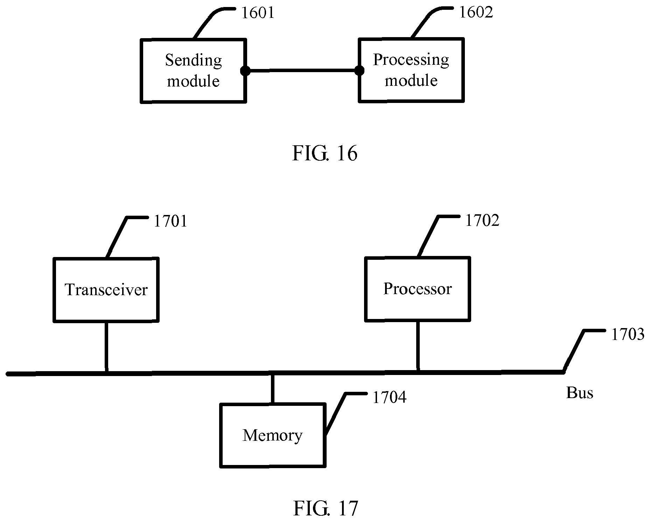

The following describes a network device according to an embodiment of this application. For details, refer to FIG. 16 that shows an embodiment of the network device according to this embodiment of this application. The network device includes:
a sending module 1601, configured to send configuration information to a terminal, where the configuration information is used to indicate that a specific logical channel uses a transparent MAC mode, and the specific logical channel is determined by the network device; and
a processing module 1602, configured to process a MAC PDU based on the configuration information.

Optionally, the processing module 1602 is specifically configured to, if the network device acts as a data sending device, construct the MAC PDU based on the configuration information, and send the MAC PDU to the terminal; or
if the network device acts as a data receiving device, decapsulate, based on the configuration information, the MAC PDU sent by the terminal.

Optionally, when a quantity of specific logical channels is 1, the configuration information is logical channel information of the specific logical channel that is included in downlink control information DCI corresponding to the MAC PDU;
or
when a quantity of specific logical channels is 1, the configuration information is a specific radio network temporary identifier RNTI specified for the specific logical channel;
or
when a quantity of specific logical channels is 1, the configuration information is logical channel information of the specific logical channel that is in half-static scheduling configuration information corresponding to the MAC PDU.

Optionally, when a quantity of specific logical channels is an integer greater than 1, the configuration information is data amount information of the specific logical channel and/or logical channel information of the specific logical channel that is included in downlink control information DCI corresponding to the MAC PDU;
or
when a quantity of specific logical channels is an integer greater than 1, the configuration information is data amount information of the specific logical channel and/or logical channel information of the specific logical channel that is included in half-static scheduling configuration information corresponding to the MAC PDU.

Optionally, the logical channel information of the specific logical channel is a logical channel identifier ID of the specific logical channel or a logical channel index of the specific logical channel, where the logical channel index is allocated by the network device; and
the half-static scheduling configuration information is at least one of radio resource control RRC configuration information, activation information, or release information.

Optionally, the data amount information of the specific logical channel is a specific quantity of bytes of transmission data of the specific logical channel, a percentage of a specific quantity of bytes of transmission data of the specific logical channel in a total data amount of the MAC PDU, or a default value obtained by dividing a data amount of the MAC PDU by the quantity of specific logical channels.

In this embodiment, the sending module 1601 sends the configuration information of the specific logical channel to the terminal, and processes the MAC PDU based on the configuration information of the specific logical channel. Because the processing module 1602 can identify the specific logical channel based on the configuration information, and the terminal can also identify the specific logical channel based on the configuration information, the MAC PDU can be processed when applied for uplink and downlink data, thereby implementing uplink and downlink data transmission in communication transmission.

For details, refer to FIG. 17 that shows another embodiment of a network device according to an embodiment of this application. The network device includes:
a transceiver 1701 and a processor 1702, where the transceiver 1701 and the processor 1702 are connected to each other by using a bus 1703.

The bus 1703 may be a peripheral component interconnect (peripheral component interconnect, PCI for short) bus, an extended industry standard architecture (extended industry standard architecture, EISA for short) bus, or the like. The bus may be classified into an address bus, a data bus, a control bus, and the like. For ease of representation, only one thick line is used to represent the bus in FIG. 17, but this does not mean that there is only one bus or only one type of bus.

The processor 1702 may be a central processing unit (central processing unit, CPU for short), a network processor (network processor, NP for short), or a combination of a CPU and an NP.

The processor 1702 may further include a hardware chip. The hardware chip may be an application-specific integrated circuit (application-specific integrated circuit, ASIC for short), a programmable logic device (programmable logic device, PLD for short), or a combination thereof. The PLD may be a complex programmable logic device (complex programmable logic device, CPLD for short), a field-programmable gate array (field-programmable gate array, FPGA for short), a generic array logic (generic array logic, GAL for short), or any combination thereof.

As shown in FIG. 17, the data sending device may further include a memory 1704. The memory 1704 may include a volatile memory (volatile memory) such as a random-access memory (random-access memory, RAM for short). The memory may alternatively include a non-volatile memory (non-volatile memory) such as a flash memory (flash memory), a hard disk drive (hard disk drive, HDD for short) or a solid-state drive (solid-state drive, SSD for short). Alternatively, the memory 1704 may include a combination of the foregoing types of memories.

Optionally, the memory 1704 may be further configured to store a program instruction. The processor 1702 may invoke the program instruction stored in the memory 1704 to execute one or more steps in the embodiments shown in FIG. 1 to FIG. 4 or execute an optional implementation thereof, to implement operations of the data sending device in the foregoing method.

The transceiver 1701 performs the following step:
sending configuration information to a terminal, where the configuration information is used to indicate that a specific logical channel uses a transparent MAC mode, and the specific logical channel is determined by the network device.

The processor 1702 performs the following step:
processing a MAC PDU based on the configuration information.

In this embodiment, the transceiver 1701 sends the configuration information of the specific logical channel to the terminal, and processes the MAC PDU based on the configuration information of the specific logical channel. Because the processor 1702 can identify the specific logical channel based on the configuration information, and the terminal can also identify the specific logical channel based on the configuration information, the MAC PDU can be processed when applied for uplink and downlink data, thereby implementing uplink and downlink data transmission in communication transmission.

It may be clearly understood by persons skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or may be not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments.

In addition, functional units in the embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of this application. The foregoing storage medium includes any medium that can store program code, such as a USB flash drive, a removable hard disk, a read-only memory (ROM, Read-Only Memory), a random access memory (RAM, Random Access Memory), a magnetic disk, or an optical disc.

The foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of this application.

## Claims

1. A data processing method, comprising:
obtaining, by a communications device, configuration information, wherein the configuration information is used to indicate that a specific logical channel uses a transparent media access control MAC mode, and the specific logical channel is determined by a network device; and
processing, by the communications device, a media access control packet data unit MAC PDU based on the configuration information.

2. The method according to claim 1, wherein the processing, by the communications device, a media access control packet data unit MAC PDU based on the configuration information comprises:
if the communications device acts as a data sending device, constructing, by the communications device, the MAC PDU based on the configuration information, and sending the MAC PDU to the network device; or
if the communications device acts as a data receiving device, decapsulating, by the communications device based on the configuration information, the MAC PDU sent by the network device.

3. The method according to claim 1 or 2, wherein when a quantity of specific logical channels is 1, the configuration information is logical channel information of the specific logical channel that is comprised in downlink control information DCI corresponding to the MAC PDU;
or
when a quantity of specific logical channels is 1, the configuration information is a specific radio network temporary identifier RNTI specified for the specific logical channel;
or
when a quantity of specific logical channels is 1, the configuration information is logical channel information of the specific logical channel that is in half-static scheduling configuration information corresponding to the MAC PDU.

4. The method according to claim 1 or 2, wherein when a quantity of specific logical channels is an integer greater than 1, the configuration information is data amount information of the specific logical channel and logical channel information of the specific logical channel that is comprised in downlink control information DCI corresponding to the MAC PDU;
or
when a quantity of specific logical channels is an integer greater than 1, the configuration information is data amount information of the specific logical channel and logical channel information of the specific logical channel that is comprised in half-static scheduling configuration information corresponding to the MAC PDU.

5. The method according to claim 3 or 4, wherein the logical channel information of the specific logical channel is a logical channel identifier ID of the specific logical channel or a logical channel index of the specific logical channel, wherein the logical channel index is allocated by the network device; and
the half-static scheduling configuration information is at least one of radio resource control RRC configuration information, activation information, or release information.

6. The method according to claim 4, wherein the data amount information of the specific logical channel is a specific quantity of bytes of transmission data of the specific logical channel, a percentage of a specific quantity of bytes of transmission data of the specific logical channel in a total data amount of the MAC PDU, or a default value obtained by dividing a data amount of the MAC PDU by the quantity of specific logical channels.

7. The method according to any one of claims 1 to 6, wherein the obtaining, by a communications device, configuration information of a specific logical channel comprises:
receiving, by the communications device, the configuration information sent by the network device.

8. The method according to claim 2, wherein the constructing, by the communications device, the MAC PDU based on the configuration information comprises:
determining, by the communications device, a data amount of a service data unit SDU of the specific logical channel based on the configuration information; and
encapsulating, by the communications device, to-be-transmitted data of the specific logical channel in a structure of the MAC PDU based on the data amount of the SDU of the specific logical channel, to constitute the MAC PDU.

9. The method according to claim 8, wherein the encapsulating, by the communications device, to-be-transmitted data of the specific logical channel in a structure of the MAC PDU based on the data amount of the SDU of the specific logical channel, to constitute the MAC PDU comprises:
if the communications device determines that a data amount of the to-be-transmitted data is greater than the data amount of the SDU of the specific logical channel, encapsulating, by the communications device, valid to-be-transmitted data of the specific logical channel in the structure of the MAC PDU, to constitute the MAC PDU, wherein a data amount of the valid to-be-transmitted data is equal to the data amount of the SDU of the specific logical channel, and the valid to-be-transmitted data is comprised in the to-be-transmitted data; or
if the communications device determines that a data amount of the to-be-transmitted data is less than the data amount of the SDU of the specific logical channel, repeatedly encapsulating, by the communications device, the to-be-transmitted data in a structure of the SDU of the specific logical channel, and encapsulating the SDU of the specific logical channel, to constitute the MAC PDU.

10. The method according to claim 8, wherein the encapsulating, by the communications device, to-be-transmitted data of the specific logical channel in a structure of the MAC PDU based on the data amount of the SDU of the specific logical channel, to constitute the MAC PDU comprises:
when the communications device determines that the quantity of specific logical channels is an integer greater than 1, encapsulating, by the communications device according to a predefined rule and based on the data amount of the SDU of the specific logical channel, the to-be-transmitted data in the structure of the MAC PDU, to constitute the MAC PDU.

11. The method according to claim 10, wherein the predefined rule is to encapsulate, in the structure of the MAC PDU in ascending order of logical channel identifiers IDs corresponding to the specific logical channels, SDUs corresponding to the specific logical channels;
or
the predefined rule is to encapsulate, in the structure of the MAC PDU in descending order of logical channel identifiers IDs corresponding to the specific logical channels, SDUs corresponding to the specific logical channels;
or
the predefined rule is to encapsulate, in a preset order in the structure of the MAC PDU, SDUs corresponding to the specific logical channels, wherein the preset order is determined by the network device or specified in a protocol.

12. The method according to claim 8, wherein the encapsulating, by the communications device, to-be-transmitted data in a structure of the MAC PDU based on the data amount of the SDU of the specific logical channel, to constitute the MAC PDU comprises:
when the communications device determines that the quantity of specific logical channels is an integer greater than 1, adding, by the communications device, a corresponding subhead to the SDU of the specific logical channel in the structure of the MAC PDU, wherein the subhead comprises only a length field, and the length field is used to indicate a data amount of the specific logical channel.

13. A data processing method, comprising:
sending, by a network device, configuration information to a communications device, wherein the configuration information is used to indicate that a specific logical channel uses a transparent MAC mode, and the specific logical channel is determined by the network device; and
processing, by the network device, a MAC PDU based on the configuration information.

14. The method according to claim 13, wherein the processing, by the network device, a MAC PDU based on the configuration information comprises:
if the network device acts as a data sending device, constructing, by the network device, the MAC PDU based on the configuration information, and sending the MAC PDU to the communications device; or
if the network device acts as a data receiving device, decapsulating, by the network device based on the configuration information, the MAC PDU sent by the communications device.

15. The method according to claim 13 or 14, wherein when a quantity of specific logical channels is 1, the configuration information is logical channel information of the specific logical channel that is comprised in downlink control information DCI corresponding to the MAC PDU;
or
when a quantity of specific logical channels is 1, the configuration information is a specific radio network temporary identifier RNTI specified for the specific logical channel;
or
when a quantity of specific logical channels is 1, the configuration information is logical channel information of the specific logical channel that is in half-static scheduling configuration information corresponding to the MAC PDU.

16. The method according to claim 13 or 14, wherein when a quantity of specific logical channels is an integer greater than 1, the configuration information is data amount information of the specific logical channel and/or logical channel information of the specific logical channel that is comprised in downlink control information DCI corresponding to the MAC PDU;
or
when a quantity of specific logical channels is an integer greater than 1, the configuration information is data amount information of the specific logical channel and/or logical channel information of the specific logical channel that is comprised in half-static scheduling configuration information corresponding to the MAC PDU.

17. The method according to claim 15 or 16, wherein the logical channel information of the specific logical channel is a logical channel identifier ID of the specific logical channel or a logical channel index of the specific logical channel, wherein the logical channel index is allocated by the network device; and
the half-static scheduling configuration information is at least one of radio resource control RRC configuration information, activation information, or release information.

18. The method according to claim 16, wherein the data amount information of the specific logical channel is a specific quantity of bytes of transmission data of the specific logical channel, a percentage of a specific quantity of bytes of transmission data of the specific logical channel in a total data amount of the MAC PDU, or a default value obtained by dividing a data amount of the MAC PDU by the quantity of specific logical channels.

19. A communications device, comprising:
a receiving module, configured to obtain configuration information, wherein the configuration information is used to indicate that a specific logical channel uses a transparent media access control MAC mode, and the specific logical channel is determined by a network device; and
a processing module, configured to process a media access control packet data unit MAC PDU based on the configuration information.

20. The communications device according to claim 19, wherein the processing module is specifically configured to, if the communications device acts as a data sending device, construct the MAC PDU based on the configuration information, and send the MAC PDU to the network device; or
if the communications device acts as a data receiving device, decapsulate, based on the configuration information, the MAC PDU sent by the network device.

21. The communications device according to claim 19 or 20, wherein when a quantity of specific logical channels is 1, the configuration information is logical channel information of the specific logical channel that is comprised in downlink control information DCI corresponding to the MAC PDU;
or
when a quantity of specific logical channels is 1, the configuration information is a specific radio network temporary identifier RNTI specified for the specific logical channel;
or
when a quantity of specific logical channels is 1, the configuration information is logical channel information of the specific logical channel that is in half-static scheduling configuration information corresponding to the MAC PDU.

22. The communications device according to claim 19 or 20, wherein the logical channel information of the specific logical channel is a logical channel identifier ID of the specific logical channel or a logical channel index of the specific logical channel, wherein the logical channel index is allocated by the network device; and
the half-static scheduling configuration information is at least one of radio resource control RRC configuration information, activation information, or release information.

23. The communications device according to any one of claims 19 to 22, wherein the receiving module is specifically configured to receive the configuration information sent by the network device.

24. The communications device according to claim 20, wherein the processing module is specifically configured to determine a data amount of a service data unit SDU of the specific logical channel based on the configuration information; and
encapsulate to-be-transmitted data of the specific logical channel in a structure of the MAC PDU based on the data amount of the SDU of the specific logical channel, to constitute the MAC PDU.

25. The communications device according to claim 24, wherein the processing module is specifically configured to, if determining that a data amount of the to-be-transmitted data is greater than the data amount of the SDU of the specific logical channel, encapsulate valid to-be-transmitted data of the specific logical channel in the structure of the MAC PDU, to constitute the MAC PDU, wherein a data amount of the valid to-be-transmitted data is equal to the data amount of the SDU of the specific logical channel, and the valid to-be-transmitted data is comprised in the to-be-transmitted data; or
if determining that a data amount of the to-be-transmitted data is less than the data amount of the SDU of the particular logical channel, repeatedly encapsulate the to-be-transmitted data in a structure of the SDU of the specific logical channel, and encapsulate the SDU of the specific logical channel, to constitute the MAC PDU.

26. A network device, comprising:
a sending module, configured to send configuration information to a communications device, wherein the configuration information is used to indicate that a specific logical channel uses a transparent MAC mode, and the specific logical channel is determined by the network device; and
a processing module, configured to process a MAC PDU based on the configuration information.

27. The network device according to claim 26, wherein the processing module is specifically configured to, if the network device acts as a data sending device, construct the MAC PDU based on the configuration information, and send the MAC PDU to the communications device; or
if the network device acts as a data receiving device, decapsulate, based on the configuration information, the MAC PDU sent by the communications device.

28. The network device according to claim 26 or 27, wherein when a quantity of specific logical channels is 1, the configuration information is logical channel information of the specific logical channel that is comprised in downlink control information DCI corresponding to the MAC PDU;
or
when a quantity of specific logical channels is 1, the configuration information is a specific radio network temporary identifier RNTI specified for the specific logical channel;
or
when a quantity of specific logical channels is 1, the configuration information is logical channel information of the specific logical channel that is in half-static scheduling configuration information corresponding to the MAC PDU.

29. The network device according to claim 28, wherein the logical channel information of the specific logical channel is a logical channel identifier ID of the specific logical channel or a logical channel index of the specific logical channel, wherein the logical channel index is allocated by the network device; and
the half-static scheduling configuration information is at least one of radio resource control RRC configuration information, activation information, or release information.

30. A computer readable storage medium, comprising an instruction, wherein when the instruction runs on a computer, the computer performs the method according to any one of claims 1 to 18.

31. A computer program product comprising an instruction, wherein when the computer program product runs on a computer, the computer performs the method according to any one of claims 1 to 18.

32. A device, comprising a memory, a processor, and a program that is stored in the memory and that can be run on the processor, wherein when the processor executes the program, the method according to any one of claims 1 to 18 is implemented.
